# EUROPÄISCHE PATENTSCHRIFT

(11) **EP 3 234 553 B1**
(45) Veröffentlichungstag und Bekanntmachung des Hinweises auf die Patenterteilung: **13.06.2018**
(21) Anmeldenummer: 15831042.5
(22) Anmeldetag: 04.12.2015
(51) Int. Cl.: G01N 21/03, G02B 21/34, B01L 3/00

(54) **HOCHDRUCKFESTE PROBENKAMMER FÜR DIE DURCHLICHT-MIKROSKOPIE UND VERFAHREN ZU DEREN HERSTELLUNG**
HIGH-PRESSURE-RESISTANCE SPECIMEN CHAMBER FOR TRANSMITTED LIGHT MICROSCOPY AND METHOD FOR PRODUCING SAME
CHAMBRE À ÉCHANTILLON RÉSISTANT AUX HAUTES PRESSIONS POUR LA MICROSCOPIE EN LUMIÈRE TRANSMISE ET PROCÉDÉ DE FABRICATION DE LADITE CHAMBRE

(30) Priorität: 15.12.2014 DE 102014018858
(43) Veröffentlichungstag der Anmeldung: 25.10.2017
(73) Patentinhaber: Alfred-Wegener-Institut Helmholtz-Zentrum für Polar- und Meeresforschung, 27570 Bremerhaven (DE)
(72) Erfinder: DUNKER, Erich, 27619 Schiffdorf (DE); WOLLENBURG, Jutta, 21755 Hechthausen-Bornberg (DE)
(86) Internationale Anmeldenummer: PCT/DE2015/000577
(87) Internationale Veröffentlichungsnummer: WO 2016/095887

(56) Entgegenhaltungen:
- US-A- 5 082 635
- US-A1- 2006 045 821
- US-A1- 2012 146 636

## Beschreibung

Die Erfindung bezieht sich auf eine hochdruckfeste Probenkammer für die Durchlicht-Mikroskopie mit zumindest einem Kammerkörper mit einem Probenraum, der in Durchlichtrichtung an gegenüberliegenden Seiten von einem transparenten ersten Sichtfenster und von einem transparenten zweiten Sichtfenster jeweils unter Zwischenlage einer Dichtung abgeschlossen ist, und mit einem ersten Spannelement und einem zweiten Spannelement zur Fixierung der beiden Sichtfenster am Probenraum, wobei das erste Spannelement eine erste Sichtöffnung und das zweite Spannelement eine zweite Sichtöffnung in den Probenraum aufweist, sowie auf ein Verfahren zur Herstellung einer solchen Probenkammer.

Der Probenraum derartiger Probenkammern kann ein Volumen von einigen Millilitern bis mehren Litern aufweisen und insbesondere flüssige Proben aufnehmen. Diese können dann über einen längeren Zeitraum beobachtet werden. Bei den Proben kann es sich beispielsweise um Zellkulturen handeln, deren Wachstum - auch unter speziellen Bedingungen, die in der Probenkammer eingestellt werden können - beobachtet werden soll. Bei der Durchlicht-Mikroskopie wird der Probenraum von einer Seite mit einer Lichtquelle durchleuchtet und von der gegenüberliegenden Seite unter einem Mikroskop beobachtet. Bei einer vertikalen Anordnung befindet sich das Mikroskop in der Regel oberhalb, die Lichtquelle unterhalb der Probenkammer. Eine horizontale Anordnung ist aber auch ohne weiteres möglich.

### Stand der Technik

Der der Erfindung nächstliegende Stand der Technik ist aus der US 5 082 635 A bekannt. Offenbart wird eine Hochdruck-Probenkammer mit einem Kammerkörper, zwei Spannelementen mit Öffnungen zum Lichtdurchtritt für die Mikroskopie sowie zwei hochdruckfesten Dichtungen, zwei Sichtfenstern und einer Hochdruck-Zuführung. Die Sichtfenster können aus Saphir oder einem harten optischen Glas oder Kunststoff sein. Die Dichtungen (O-Ringe) sind aus einem Elastomer. Eine ähnliche Probenkammer ist aus der US 2006/045821 A1 bekannt. Hier sind die Sichtfenster aus Saphir, die Dichtungen aus Metall oder Elastomeren. Die US 2012/146636 A1 offenbart eine NMR (Nuclear-Magnetic-Resonance) Hochdruck-Probenkammer und schlägt die Materialien Saphir und Polycarbonat für die Sichtfenster vor.

In der DE 101 16 938 C1 wird eine Probenkammer für die Durchlicht-Lichtmikroskopie zur Aufnahme und Versorgung von Zellkulturen offenbart, wobei die Probenkammer Abmessungen einer handelsüblichen Objektträgerplatte aufweist. Der Probenraum befindet sich in einem Kammerkörper und ist von einem ersten Sichtfenster unter Zwischenlage einer Dichtung abgedeckt. Das erste Sichtfenster wird durch ein erstes Spannelement und eine Distanzplatte im Kammerkörper am Probenraum fixiert. Auf der gegenüberliegenden Seite des Kammerkörpers ist ein zweites Sichtfenster auf einem zweiten Spannelement angeordnet. Die beiden Spannelemente sind einstückig als Spannklammer ausgebildet, die die gesamte Probenkammer umgreift und die beiden Sichtfenster fixiert. Oberhalb der Sichtfenster weisen die Spannelemente Sichtöffnungen in Form von Aussparungen auf. Die Dichtungen bestehen aus Silikon, die unter Anpressdruck durch elastische Verformung dichten. Die Sichtfenster weisen eine nur sehr geringe Dicke auf und sind oberhalb des Atmosphärendrucks nicht hochdruckfest.

Aus der DE 101 48 210 B4 ist eine Probenkammer für lichtmikroskopische Untersuchungen an Flüssigkeiten bekannt, bei der zwei zylindrische Flüssigkeitsreservoire auf einer transparenten Bodenplatte angeordnet sind, die in ihrer Unterseite verbindende Kanäle aufweist. Die Flüssigkeitsreservoire und die Bodenplatte sind einstückig ausgebildet und bestehen aus Polycarbonat, einem hochwertigen Kunststoff, der keine Doppelbrechung und keine Autofluoreszenz aufweist. Die Herstellung erfolgt durch Spritzguss.

Aus der DE 203 11 434 U1 ist eine Probenkammer zur mikroskopischen Beobachtung von Objekten unter hohem Druck bekannt, bei dem eine gute optische Auflösung auch unter einem hohem Druck - bis 30 kN/cm² (entsprechend 3000 bar) - erreicht werden soll. Dafür werden exakt eingeschliffene Sichtfenster mit geringer optischer Dichte verwendet. Spannelemente zum Fixieren der Scheiben entfallen, da sich die Sichtfenster vom Probenraum weg konisch verengen. Bei niedrigeren Drücken wird die Probenkammer durch einen elastischen O-Ring, bei höheren Drücken durch eine progressive Metalldichtung abgedichtet. Dabei wird die Metalldichtung von einem Deckelelement gebildet, das mit dem Grundkörper verschraubt ist.

Aus der DE 20 2008 010 895 U1 ist eine Probenkammer für mikroskopische Beobachtungen bekannt, bei der der Probenraum von einem Ring aus Polytetrafluorethylen mit einem Steg gebildet wird. Über den Steg greift ein Edelstahl-Schraubring und fixiert den Probenraum am Kammerkörper. Dabei ist der Schraubring nur so fest angezogen, dass ein Flüssigkeitsabschluss des Probenraums nach unten gewährleistet ist. Entsprechend ist nur ein unteres Sichtfenster unter Zwischenlage eines Dichtrings zum Abschluss des Probenraums vorgesehen. Nach oben ist der Probenraum offen. Eine Druckbeaufschlagung der Probe oberhalb des Atmosphärendrucks ist somit nicht möglich.

Weiterhin ist aus der DE 10 2010 002 915 B4 ein mikrofluidischer Sensor bekannt, bei dem oberhalb eines Grundsensors eine mit Stegen strukturierte Probenkammer angeordnet ist. Diese Kammer besteht aus Polycarbonat und wird durch ein Tiefziehverfahren mit Fließverflüssigung und plastischer Verformung hergestellt. Ein Einsatz als Probenkammer unter Druckbeaufschlagung ist jedoch nicht möglich.

Weiterhin ist aus der DE 198 03 551 C1 eine Temperierzelle zum Heizen oder Kühlen einer mit einem Mikroskop zu untersuchenden Probe bekannt, die einen Probenraum mit zwei Sichtfenstern aufweist, der durch elektrische Heizelemente und kühlmitteldurchflossene Kühlkanäle auf eine gewünschte Temperatur einstellbar ist. Die Temperierzelle ist hochdruckfest ausgebildet, wobei die im Querschnitt rechteckigen Sichtfenster auf der Innenseite des Probenraums auf einen durch Kontermuttern gesicherten Fenstersitz aufgeklebt und über eine selbstverstärkende Metalldichtung abgedichtet sind.

Aus der US 2006/0045821 A1 ist ein Mikroreaktor zur in-situ-Materialbeobachtung im Durchlicht mit einstellbarem Druck (Hochdruck bis 4.500 psi, entsprechend bis 3,1 kN/cm²) bekannt. Die beiden Sichtfenster mit rechteckigem Querschnitt sind jeweils zwischen zwei hochdruckfesten Dichtringen eingeklemmt. Aus der US 2008/0083268 A1 ist eine ähnliche Vorrichtung bekannt, bei der die beiden im Querschnitt ebenfalls rechteckigen Sichtfenster gegen einen Absatz im Gehäuse gepresst werden. Aus der DD 51 714 A1 ist weiterhin eine Vorrichtung zur mikroskopischen Durchlicht-Untersuchung unter erhöhtem Druck (bis 25 kp/cm², entsprechend bis 0,25 kN/cm²) bekannt, bei der zwei Sichtfenster mit ihrer rückseitigen rechteckigen Form in das Gehäuse eingepasst sind. Das eine Sichtfenster ist auch zum Probenraum hin rechteckig ausgebildet, wohingegen das andere Sichtfenster dort ballig ausgebildet ist. Aus der EP 0 458 672 A1 schließlich ist ebenfalls eine Hochdruckkammer (15 GPa, entsprechend 1500 kN/cm²) für die Durchlichtmikroskopie bekannt, bei der die beiden kristallinen Sichtfenster kegelförmig ausgebildet sind, wobei die Kegelspitzen zum Probenraum zeigen. Die kreisförmigen Grundflächen der beiden Sichtfenster sind über Dichtringe in Absätze im Gehäuse eingepasst.

### Aufgabenstellung

Ausgehend von der eingangs beschriebenen gattungsgemäßen Probenkammer sind die **Aufgaben** für die vorliegende Erfindung darin zu sehen, diese so weiterzubilden, dass für mikroskopische Durchlicht-Untersuchungen von Substanzen im Probenraum unter Hochdruck, speziell in einem Bereich oberhalb von 100 bar (entsprechend 1kN/cm²) der mikroskopische Einblick in den Probenraum optimal gewährleistet ist, insbesondere sollen Verzerrungen und Brechungen durch das entsprechende Sichtfenster vermieden sein. Dabei sollen die Sichtfenster aber auch unter Hochdruck sicher am Probenraum fixiert sein. Ein bevorzugtes Verfahren zur Herstellung der Probenkammer soll besonders einfach und kostengünstig sein. Insbesondere sollen keine speziellen Werkzeuge benötigt werden. Die **Lösungen** für diese Aufgaben sind dem Erzeugnisanspruch sowie dem nebengeordneten Verfahrensanspruch zu entnehmen. Vorteilhafte Weiterbildungen der Erfindung werden jeweils in den Unteransprüchen aufgezeigt und im Folgenden im Zusammenhang mit der Erfindung näher erläutert.

Die beanspruchte Probenkammer ist erfindungsgemäß dadurch gekennzeichnet, dass das erste Sichtfenster einen ersten planparallelen Absatz aufweist, der in die erste Sichtöffnung des ersten Spannelements passgenau hineinragt, und das zweite Sichtfenster einen zweiten planparallelen Absatz aufweist, der in die zweite Sichtöffnung des zweiten Spannelements passgenau hineinragt, wobei die Sichtfenster und die Dichtungen jeweils aus einem Plastomer bestehen, und dass im Kammerkörper hochdruckfeste Zu- und Ableitungskanäle angeordnet sind, die eine Versorgung des Probenraums und/oder eine Zirkulation durch den Probenraum ermöglichen.

Die Sichtöffnung des ersten Spannelements bildet den Einblickbereich für das Mikroskop in den Probenraum. Durch den planparallelen Absatz ist das erste Sichtfenster genau in die Sichtöffnung des ersten Spannelements eingepasst und kann auch unter Hochdruckbeaufschlagung im Kammerkörper seitlich nicht verrutschen. Dabei behindert die planparallele Ausbildung des Absatzes nicht den Einblick in den Probenraum, insbesondere erzeugt sie keine Verzerrungen. Das zweite Sichtfenster ragt mit einem planparallelen Absatz in die Sichtöffnung des zweiten Spannelements hinein. Da von dieser Seite - in der Regel ist die untere Seite der Probenkammer bei einer vertikalen Durchlichtrichtung - das Licht in den Probenraum geführt wird, ist hier eine verzerrungsfreie Oberfläche des Sichtfensters nicht zwingend erforderlich. Der zweite Absatz sorgt vor allem für einen sicheren Sitz des zweiten Sichtfensters am Probenraum. Die passgenaue Einbindung der Absätze in die Spannelemente gewährleistet bereits einen guten Sitz. Eine Dichtheit auch unter Hochdruck wird bei der erfindungsgemäßen Druckkammer durch das Vorsehen von hochdruckfesten Dichtungen aus einem Plastomer erreicht. Dabei wird der Bereich des Hochdrucks allgemein ab einem Druck von einschließlich 100 bar (entsprechend 1 kN/cm²) definiert. Die erfindungsgemäße Probenkammer kann beispielsweise in einem Bereich zwischen 200 und 1000 bar (entsprechend 2 bis 10 kN/cm²), insbesondere auch bei 500 bar (entsprechend 5 kN/cm²), optimal eingesetzt werden. Ein Einsatz der erfindungsgemäßen Probenkammer bei niedrigeren Drücken (Niederdruckbereich zwischen 1 bar und 65 bar (entsprechend 0,01 kN/cm² bis 0,65 kN/cm²) und Mitteldruckbereich zwischen 65 bar und 100 bar (entsprechend 0,65 kN/cm² und 1 kN/cm²)) oder Atmosphärendruck ist natürlich auch möglich, wobei die optimale Einsichtmöglichkeit in den Probenraum durch das unverzerrende, glasklare Sichtfenster aus Plastomer auch dabei besonders vorteilhaft ist.

Eine einfache Befüllung und Leerung der Probenkammer wird bei der beanspruchten Probenkammer erfindungsgemäß dadurch erreicht, dass im Kammerkörper hochdruckfeste Zuleitungskanäle und Ableitungskanäle angeordnet sind, die eine Versorgung der Probenkammer und/oder eine Zirkulation durch die Probenkammer ermöglichen. Dabei ist das versorgende und/oder zirkulierende Medium ein Fluid, in der Regel eine Flüssigkeit. Damit kann die Probenkammer auch als Durchflusskammer, insbesondere auch für Langzeitbeobachtungen, unter parametrierbaren Randbedingungen, eingesetzt werden. Über die Kanäle kann beispielsweise eine Versorgung von Lebendorganismen mit Sauerstoff und Nahrung erfolgen.

Mit der beanspruchten Probenkammer können beispielsweise Zellkulturen, Bakterien, Mikroorganismen oder kleine Metazoen gehältert, optisch kontrolliert und physiologisch akkurat dokumentiert werden. Dies erlaubt sowohl die Bilanzierung von beispielsweise Sauerstoffzehrungsraten verschiedener Tiergruppen unter bestimmten Druckbedingungen in unterschiedlichen Wassertiefen als auch die mikroskopische Beobachtung von Zellprozessen unter variablen Druckbedingungen. Eine andere Anwendungsmöglichkeit besteht in der Blutuntersuchung unter Druck, wie sie beispielsweise bei Berufstauchern regelmäßig erforderlich ist.

Als Material wird bei der erfindungsgemäßen Probenkammer für die beiden Sichtfenster und die Dichtungen ein Plastomer verwendet, wobei das Plastomer für das Sichtfenster natürlich transparent ist. Plastomere zeichnen sich dadurch aus, dass sie auf eine Druckbeaufschlagung mit einer plastischen Verformung reagieren. Plastomere stehen nach ihrer Formgebung unter inneren Spannungen. Bei einer Druckbeaufschlagung fangen sie an, sich plastisch zu verformen (es kann hier auch von "Fließen" gesprochen werden), um die Spannungen auszugleichen, wobei das Maß der plastischen Verformung von dem Maß der Druckbeaufschlagung und der Formgebung des Plastomers abhängig ist. Die sich einstellende plastische Verformung bleibt dann nach Erreichen des inneren Spannungsausgleichs bestehen und ist bis zur Höhe der erfolgten Druckbeaufschlagung wieder belastbar. Bei einer höheren Druckbelastung verformt sich das Plastomer erneut bis zum Ausgleich der inneren Spannungen und ist dann bis zu diesem höheren Druckwert dauerhaft formstabil. Die plastische Verformbarkeit des Plastomers ermöglicht ein besonders einfaches Herstellungsverfahren, das weiter unten erläutert wird. Bevorzugt kann es sich bei dem Plastomer für die beiden Sichtfenster um Polycarbonat handeln, das hochtransparent ist und als Durchblickfenster zum Mikroskopieren besonders geeignet ist. Polycarbonat hat eine hohe Kriechfestigkeit (Dauerstandfestigkeit) und ist damit dauerhaft gut formstabil, verformt sich aber unter entsprechender Druckbeaufschlagung auch gut plastisch. Für die Dichtungen wird bevorzugt und vorteilhaft Polytetrafluorethylen verwendet, das ebenfalls zur Gruppe der Plastomere gehört. Polytetrafluorethylen (PTFE, Handelsname Teflon®) ist nicht transparent, zeigt aber gute Gleit- und Schmiereigenschaften und ist als Dichtmaterial sehr gut geeignet. Durch die Wahl eines Plastomers für die Dichtungen verformen sich diese ebenfalls unter Druckbeaufschlagung plastisch. Dabei erfolgt die plastische Verformung in den die Dichtungen umgebenden Raum hinein, sodass dieser unter Hochdruckeinwirkung sicher, zuverlässig und dauerhaft abgedichtet wird. Dabei haben sich plastisch anpassende Dichtungen gegenüber sich elastisch anpassenden Dichtungen einen erheblichen Vorteil bezüglich ihrer Dichtwirkung. Die plastische Verformbarkeit auch der Dichtungen ist bei dem bevorzugten Herstellungsverfahren für die beanspruchte Probenkammer ebenfalls von Bedeutung, wie weiter unten ausgeführt wird.

Bei einem Plastomer hängt das Maß der plastischen Verformung von dem Material selbst und auch von der Materialstärke des ausgeformten Elements ab. Dünnere Materialstärken verformen sich unter Druck stärker als dickere. Bevorzugt ist bei der beanspruchten Probenkammer das erste Sichtfenster dicker ausgebildet als das zweite Sichtfenster. Das erste (obere) Sichtfenster bildet in der Regel das Einblickfenster für das Mikroskop. Hier ist es wichtig, dass keine Verzerrungen auftreten. Bei einer größeren Dicke des Sichtfensters tritt unter Druckbeaufschlagung eine geringere plastische Verformung auf, sodass der entstehende Absatz, der in die erste Öffnung des ersten Spannelements hineinragt, entsprechend flach und planparallel ist. Durch das zweite (untere) Sichtfenster fällt im späteren Einsatzbetrieb in der Regel das Licht, optische Verzerrungen sind nicht so relevant. Deshalb kann das zweite Sichtfenster dünner ausgebildet sein, sodass es sich unter Druckbeaufschlagung auch stärker plastisch verformt. Dadurch entsteht ein größerer planparalleler Absatz mit einer hohen Passgenauigkeit, der eine hohe Formstabilität der Probenkammer auch unter höchsten Druckbeaufschlagungen sicher gewährleistet. Umgekehrte Verhältnisse sind bei einer Vertauschung von Mikroskop und Lichtquelle ohne weiteres möglich.

Eine günstige Form, auch im Hinblick auf die Montage der Probenkammer, ergibt sich, wenn vorteilhaft und bevorzugt der Probenraum, die beiden Sichtfenster, die beiden Spannelemente und die beiden Dichtungen zylinderförmig ausgebildet sind. Dann können vorteilhaft die beiden Spannelemente jeweils ein Außengewinde aufweisen, mit denen sie in Innengewinde im Kammerkörper eingeschraubt sind. Dadurch sind eine besonders gute Hochdruckfestigkeit sowie einfache Montage und Wartung der Probenkammer möglich. Die Dichtungen bei der beanspruchten Probenkammer können bevorzugt und vorteilhaft in Dichtnuten im Kammerkörper eingelegt sein, wobei die Dichtnuten den Probenraum in geschlossener Form umlaufen. Ringförmige Dichtungen mit beispielsweise rechteckigem Querschnitt sind handelsüblich und kommerziell preiswert zu beziehen.

Weiterhin ist es bei der beanspruchten Probenkammer bevorzugt und vorteilhaft, wenn noch Heiz- und/oder Kühlelemente für den Probenraum vorgesehen sind. Der Probenraum kann dann für eine optimale Hälterung von Lebendorganismen auch gezielt gekühlt oder geheizt werden. Da viele zu untersuchende Organismen so klein sind, dass sie während der Hälterung aus dem Probenraum abwandern oder im Durchflussbetrieb herausgespült werden, ist es vorteilhaft und bevorzugt, wenn im Probenraum um die Durchlichtrichtung herum ein wasserdurchlässiger Ringfilter über die gesamte Höhe des Probenraums vorgesehen ist. Die Organismen befinden sich dann innerhalb des Ringfilters und damit genau in der Beobachtungszone. Durch den oberen und unteren Anschluss des Ringfilters an den Probenraum können die Organismen nicht aus dem Ring-filter entweichen, wohingegen dieser gut von Wasser durchspült werden kann. Eine zuverlässige, aber auch sehr feine Porosität ist insbesondere vorteilhaft und bevorzugt dann gegeben, wenn der Ringfilter aus einem Sintermaterial besteht, das zudem noch beständig gegen Korrosion durch Wasser ist.

In den vergangenen Jahren wurden am Alfred-Wegener-Institut mehrfach erfolgreich unter Hochdruck (bis 250 bar, entsprechend 2,5 kN/cm²) Kultivierungsversuche an benthischen Tiefseeforaminiferen durchgeführt. Es konnte nachgewiesen werden, dass mit den hierbei benutzten großvolumigen Hochdruckaquarien und dem Meerwasserzirkulationskreislauf alle mit einem Kernbohrer gewonnen Foraminiferenarten zur Reproduktion angeregt werden konnten. Im Vergleich dazu gelang dies unter Atmosphärendruck bei nur wenigen im Sediment lebenden Arten und nahezu keinen auf dem Sediment lebenden Arten. Die für paläozeanographische Rekonstruktionen benutzte Art *Cibicides wuellerstorfi* konnte in den Experimenten erstmals in Kulturversuchen reproduziert werden. Eine solche experimentelle Züchtung ist die Grundlage für die experimentelle Kalibrierung vieler bedeutender paläozeanographischer Proxies, beispielsweise stabile Isotopenverhältnisse und Spurenmetallverhältnisse in Carbonatschalen benthischer Tiefseeforaminiferen.

Bislang wurden Probenräume mit bis zu 2,5 I Volumen eingesetzt. Der Probenraum der mit der vorliegenden Erfindung beanspruchten Probenkammer ist hingegen sehr klein und kann beispielsweise in einem Bereich von nur 0,2 ml liegen. Ein derartig geringes Volumen reicht aber völlig aus, um beispielsweise Bakterien, Mikroorganismen oder kleine Metazoen mikroskopisch zu beobachten. Mit der beanspruchten Probenkammer kann diese Beobachtung dauerhaft über einen sehr langen Zeitraum und unter sehr hohem Druck, beispielsweise 500 bar (entsprechend 5 kN/cm²) erfolgen. Durch den Einbau von verschiedenen Ventilgruppen und einer Hochdruckkolbenpumpe können isokratische, isobare Wasserkreisläufe durch die Probenkammer konstant betrieben werden.

Da das Wasser kontinuierlich ausgetauscht werden kann, lässt sich das Umgebungsmilieu der Tiere, Bakterien oder Zellgruppen in der Probenkammer genau definieren und jede noch so kleine Veränderung dokumentieren, beispielsweise können individuelle Sauerstoffzehrungsraten für Individuen bei unterschiedlichen Drücken berechnet oder Reproduktionszeitpunkte festgehalten werden. Weiterhin können Sauerstoff-, pH- und andere Werte in einfacher Weise konstant gehalten werden. Da die Probenkammer beidseits mit den transparenten Scheiben ausgestattet ist, können die eingebrachten Individuen oder das eingebrachte Medium konstant visuell überwacht werden. Bei einer Verwendung von Polycarbonat für die transparenten Scheiben entsprechen die optischen Parameter einander (Polycarbonat: Materialdichte 1,2 bis 1,24 g/cm³, Brechungsindex 1,58; Wasser: Materialdichte 1,0 g/cm³; Brechungsindex 1,33), wodurch keine beeinträchtigenden Brechungserscheinungen durch das Polycarbonat auftreten und auch Zelldetails erkennbar sind. Ferner beeinträchtigt Polycarbonat nicht die Resultate von Fluoreszenzanregung und optischer Auswertung.

Durch die Verwendung von Sichtfenstern und Dichtungen aus einem plastisch verformbaren Plastomer kann die beanspruchte Probenkammer in besonders einfacher Weise hergestellt werden. Ein vorteilhaftes und bevorzugtes Verfahren ist dadurch gekennzeichnet, dass eine transparente absatzfreie erste Planscheibe und eine transparente absatzfreie zweite Planscheibe unter Zwischenlage von Dichtringen in die Probenkammer eingebracht werden, wobei die beiden Planscheiben und die Dichtringe jeweils aus einem Plastomer bestehen, anschließend die Probenkammer fertigmontiert und abschließend der Probenraum mit einem solchen Hochdruck beaufschlagt wird, dass die beiden Planscheiben und die Dichtringe sich plastisch verformen und die ersten und zweiten Sichtfenster mit planparallelen Absätzen und die beiden hochdruckfesten Dichtungen ausbilden. Die Sichtfenster mit den Absätzen und die hochdruckfesten Dichtungen werden somit in-situ in der eigentlichen, für den späteren Mikroskopierbetrieb vorgesehenen Probenkammer hergestellt. Aufwändige Herstellungsvorrichtungen oder Spezialwerkzeuge sind nicht erforderlich. Das in-situ-Herstellen ermöglicht eine optimale Passgenauigkeit der Absätze in die Sichtöffnungen der Spannelemente. Jedes Paar von Sichtfenstern wird individuell in die einzelne Probenkammer eingepasst, indem diese nach der Fertigmontage (mit einfachen Planscheiben und Dichtringen) unter Hochdruck gesetzt wird. Eine Demontage der Sichtfenster ist trotzdem möglich. Sie können durch neue Sichtfenster mit Absätzen ersetzt werden, indem neue Planscheiben eingelegt und entsprechend unter einen Hochdruck gesetzt werden und wiederum Absätze bilden. Die gleichen Vorteile gelten auch für die Dichtungen, die ebenfalls aus einem fließfähigen Plastomer bestehen. Bevorzugt wird für die Planscheiben Polycarbonat und für die Dichtringe Polytetrafluorethylen PTFE verwendet. Unter der Beaufschlagung mit einem Hochdruck beginnen die Dichtringe, zwischen den Kammerkörper und die Planscheiben zu fließen und diesen Raum auszufüllen, wodurch ihre Dichtwirkung wesentlich erhöht wird. Die plastische Verformung der Planscheiben und Dichtringe ist irreversibel und formstabil bei jeder Druckbelastung, die den bei der Herstellung aufgeprägten Hochdruck nicht übersteigt. Bei höheren Drücken ergibt sich eine weitere Verformung, die dann aber wiederum bis zu diesen höheren Drücken auch formstabil ist. Durch die Ausbildung der planparallelen Absätze auf den einen Seiten der Planscheiben ergeben sich auf den gegenüberliegenden Seiten minimale Einsenkungen, die aber die Funktionsfähigkeit der ausgebildeten Sichtfenster nicht beeinträchtigen.

Im Verfahren kann bevorzugt und vorteilhaft der Probenraum und damit die Planscheiben und die Dichtringe zur Anregung der plastischer Verformung mit einem Hochdruck zwischen 2 kN/cm² (entsprechend 200 bar) und 15 kN/cm² (entsprechend 1500 bar), bevorzugt mit einem Hochdruck zwischen 3 kN/cm² (entsprechend 300 bar) und 8 kN/cm² (entsprechend 800 bar), bevorzugt mit einem Hochdruck von 5 kN/cm² (entsprechend 500 bar) beaufschlagt werden. Bei einem aufgeprägten Hochdruck von 500 bar können im späteren Mikroskopierbetrieb beispielswiese Tiere unter einem Hochdruck von 500 bar gehältert und mikroskopisch untersucht werden, deren Lebensraum im Meer in 5000 m Tiefe liegt. Mit der Probenkammer können dann auch alle Tiefen, die oberhalb 5000 m liegen, simuliert werden. Entsprechend können bei den anderen aufgeprägten Hochdrücken andere Lebensraumtiefen in der beanspruchten Probenkammer simuliert werden. Auch Simulationen von mehr als 1500 m, z.B. bis 3000 m, sind möglich. Andererseits ist eine Einstellung von Atmosphärendruck zur Simulation von oberflächennahen Lebensräumen natürlich auch möglich. Für die Probenkammer nach der Erfindung bestehen vielfältige Anwendungsmöglichkeiten, insbesondere können lebende Organismen unter Nachahmung ihrer natürlichen Lebensbedingungen dauerhaft beobachtet werde. Eine Bezeichnung der Probenkammer nach der Erfindung als "Durchlicht-Hochdruckaquarium" ist dabei passend. Bei den verschiedenen Anwendungen wird die Probenkammer nach der Erfindung während des Mikroskopierens mit einem solchen Druck beaufschlagt, der zwischen dem Atmosphärendruck und demjenigen Druck liegt, mit dem der Probenraum während des Herstellens beaufschlagt du zur plastischen Verformung angeregt wurde. Damit ist die beanspruchte Probenkammer sowohl für Anwendungen bei Atmosphärendruck als auch bei Hochdruck bestens geeignet. Bei der Hälterung und Beobachtung von kleinsten Lebendorganismen ist es bevorzugt und vorteilhaft, wenn nach dem Einbringen einer der beiden Planscheiben und einem der beiden Dichtringe ein Ringfilter um die Durchlichtrichtung herum in die Probenkammer eingebracht wird. Der Ringfilter erstreckt sich dann entlang der Durchlichtachse und hält Mikroorganismen im Mikroskopierfeld, ohne eine Durchströmung zu behindern. Weitere Einzelheiten zur Erfindung sind dem nachfolgenden speziellen Beschreibungsteil zu entnehmen.

### Ausführungsbeispiele

Nachfolgend werden die Probenkammer und das bevorzugte Verfahren zur Herstellung der Probenkammer nach der Erfindung und ihre vorteilhaften Modifikationen anhand der schematischen, nicht maßstäblichen Figuren zum besseren Verständnis der Erfindung an einem Ausführungsbeispiel noch weitergehend erläutert. Dabei zeigt die
- **Figur 1**: die hochdruckfeste Probenkammer im Querschnitt,
- **Figur 2**: die hochdruckfeste Probenkammer in der Draufsicht und
- **Figuren 3A, B, C**: verschiedene Stufen im Verfahrensablauf.

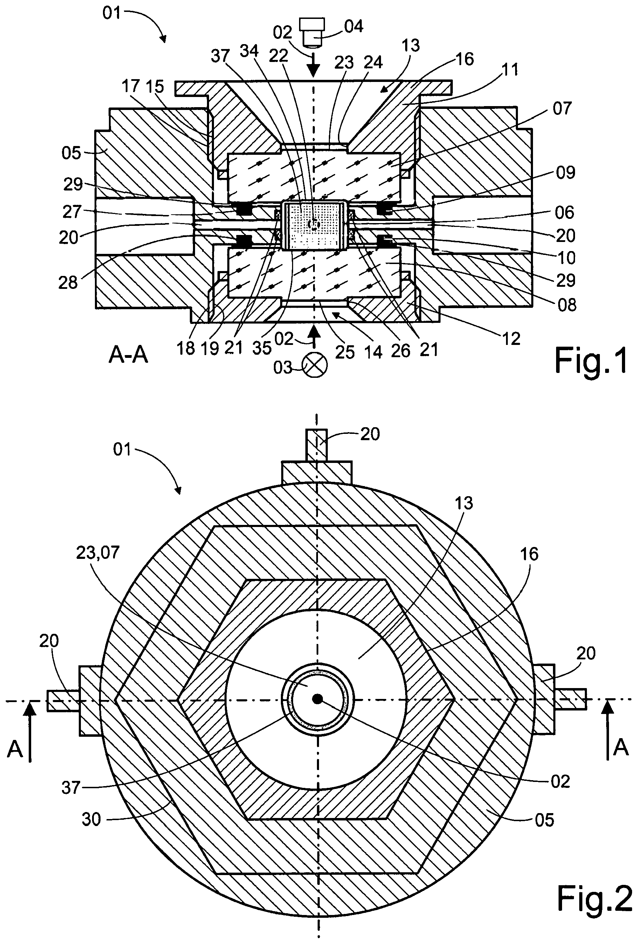

In der **Figur 1** ist eine hochdruckfeste Probenkammer **01** für die Durchlicht-Mikroskopie dargestellt. Im gezeigten Ausführungsbeispiel ist eine vertikale Durchlichtrichtung **02** gewählt, d.h. unterhalb der Probenkammer **01** befindet sich im Mikroskopierbetrieb eine Lichtquelle **03,** die die Probenkammer **01** zentral durchstrahlt, und oberhalb der Probenkammer **01** befindet sich ein Mikroskop **04,** mit dem die Probenkammer **01** beobachtet werden kann. Eine umgekehrte oder horizontale oder geneigte Anordnung der Durchlichtrichtung **02** ist aber ebenfalls möglich.

Die Probenkammer **01** umfasst einen Kammerkörper **05** mit einem zentralen Probenraum **06,** der in Durchlichtrichtung **02** an gegenüberliegenden Seiten von einem transparenten ersten Sichtfenster **07** und von einem transparenten zweiten Sichtfenster **08** abgeschlossen ist. Dabei sind eine erste hochdruckfeste Dichtung **09** und eine zweite hochdruckfeste Dichtung **10** zwischengelegt. Die beiden Sichtfenster **07, 08** werden von einem ersten Spannelement **11** und einem zweiten Spannelement **12** am Probenraum **06** hochdruckfest fixiert. Dabei weist das erste Spannelement **11** eine erste Sichtöffnung **13** und das zweite Spannelement **12** eine zweite Sichtöffnung **14** in den Probenraum **06** auf. Die Spannelemente **11, 12** behindern somit die Durchlichtrichtung **02** nicht. Im gezeigten Ausführungsbeispiel sind der Probenraum **06,** die beiden Sichtfenster **07, 08,** die beiden Spannelemente **11, 12** und die beiden Dichtungen **09, 10** zylinderförmig ausgebildet.

Das erste Spannelement **11** weist ein erstes Außengewinde **15** auf, mit dem es mittels eines Betätigungselements **16** in ein erstes Innengewinde **17** im Kammerkörper **05** eingeschraubt ist. Das Betätigungselement **16** ist im gezeigten Ausführungsbeispiel sechskantig ausgeführt (vergleiche **Figur 2**) und wird mit einem entsprechenden Werkzeug hochdruckfest in den Kammerkörper **05** eingeschraubt. Eine Montage und Demontage ist daher einfach möglich. Das zweite Spannelement **12** weist ein zweites Außengewinde **18** auf, mit dem es in ein zweites Innengewinde **19** im Kammerkörper **05** eingeschraubt ist. Das zweite Spannelement **12** verfügt beispielsweise über einen Innensechskant und wird ebenfalls mittels eines passenden Werkzeugs in den Kammerkörper **05** druckdicht eingeschraubt. Dabei wird es im gezeigten Ausführungsbeispiel bündig, also nach unten mit dem Kammerkörper **05** abschließend, eingeschraubt, sodass die gesamte Probenkammer **01** sicher auf einer ebenen Unterlage aufgestellt werden kann.

Weiterhin weist die Probenkammer **01** mehrere Zu- und Ableitungskanäle **20** auf, beispielsweise auch drei Druckanschlüsse an drei Seiten der Probenkammer **01,** über die der Probenraum **05** versorgt und unter Hochdruck gesetzt werden kann. Kühl- und Heizelemente **21** zum Kühlen oder Heizen des Probenraums **05** sind im gewählten Ausführungsbeispiel ebenfalls dargestellt. Ein Kammerloch **22** in der Mitte des Probenraums **05** deutet einen weiteren Zu- und Ableitungskanal **20** in den Probenraum **05** an, vergleiche **Figur 2****.** Um die Durchlichtrichtung **02** herum ist im Probenraum **06** ein Ringfilter **37** angeordnet, der aus einem hochporösen Sintermaterial besteht (in der **Figur 1** ebenfalls geschnitten dargestellt). Der Ringfilter **37** hat im gewählten Ausführungsbeispiel einen Außendurchmesser von 8,8 mm bei einer Wandstärke von 0,4 mm und einer Höhe von 5 mm. Im Inneren des Ringfilters **37** können kleinste Organsimen genau und dauerhaft in der Durchlichtrichtung **02** gehältert werden. Dadurch, dass der Ringfilter **37** oben und unten an den Probenraum **06** anschließt, können die Organismen auch oben und unten nicht entweichen. Durch seine Porosität kann der Ringfilter **37** aber trotzdem gut senkrecht zur Durchlichtrichtung **02** von Wasser durchströmt werden.

In der **Figur 1** ist zu erkennen, dass das erste Sichtfenster **07** einen planpara-Ilelen ersten Absatz **23** aufweist, der passgenau in die erste Sichtöffnung **13** hineinragt. Im gezeigten Ausführungsbeispiel weist die konisch verlaufende Sichtöffnung **13** hierfür einen ersten zylindrischen Ansatz **24** auf. Mit dem Begriff "passgenau" ist im Übrigen keine exakte Passung nach DIN-Norm gemeint. Vielmehr soll zum Ausdruck gebracht werden, dass der planparallele erste Absatz **23** sehr genau in die erste Sichtöffnung **13** bzw. deren zylindrischen Ansatz **24** hineinpasst. Es sind keine Spalte vorhanden, vielmehr kann sogar ein Presssitz gegeben sein. Analog weist auch das zweite Sichtfenster **08** einen planparallelen zweiten Absatz **25** auf, der passgenau in die zweite Sichtöffnung **14** hineinragt. Dabei ist auch die zweite Sichtöffnung **14** konisch ausgebildet und verfügt über einen zweiten zylindrischen Ansatz **26,** in dem der planparallele zweite Absatz **25** passgenau sitzt. Auch hier kann ein Presssitz gegeben sein. Gegenüber den ersten und zweiten Absätzen **23, 25** weisen die Sichtfenster **07, 08** geringe Einsenkungen **35, 36** auf, die während der Herstellung entstanden sind. Die geringen Einsenkungen **35, 36** behindern aber insbesondere am ersten Sichtfenster **07** den Einblick mit dem Mikroskop nicht und rufen keine messwertverfälschenden Verzerrungen hervor.

Im gewählten Ausführungsbeispiel bestehen die beiden Sichtfenster **07, 08** aus hochtransparentem Polycarbonat, das eine Dichte und einen Brechungsindex aufweist, die nahe der Dichte und dem Brechungsindex von Wasser liegen. Dadurch ergeben sich bei der mikroskopischen Untersuchung von wässrigen Substanzen kein beeinträchtigenden Verzerrungen oder Brechungen. Im gezeigten Ausführungsbeispiel hat das erste Sichtfenster **07** eine Dicke von 6 mm, wohingegen das zweite Sichtfenster **08** eine Dicke von 5 mm aufweist. Entsprechend verformt sich das dünnere zweite Sichtfenster **08** stärker plastisch bei der Herstellung als das dickere erste Sichtfenster **07** und der zweite Absatz **25** ist dicker als der erste Absatz **23.** Durch das dünnere zweite Sichtfenster **08** wird im unteren Bereich der Probenkammer **01** Platz gespart und der Sitz über den dickeren Absatz **25** verbessert, wohingegen im oberen Bereich durch den dünneren Absatz **23** der Einblick in den Probenraum **06** ungehindert bleibt. Der Probenraum **06** hat im gewählten Ausführungsbeispiel einen Durchmesser von 9 mm und eine Höhe von 5 mm, sodass er ein Volumen von 0,254 ml fasst. Die gesamte Probenkammer **01** hat im gewählten Ausführungsbeispiel eine Höhe von 25 mm und einen Durchmesser von 50 mm, sodass sie sehr kompakt und gut handhabbar ist.

Die beiden Dichtungen **09, 10** bestehen aus PTFE und befinden sich in Dichtnuten **27, 28** im Kammerkörper **05.** Zwischen den beiden Sichtfenstern **07, 08** und dem Kammerkörper **05** ergibt sich ein geringer Spalt **29,** der beispielsweise am zweiten Sichtfenster **08** nur 0,1 mm und am ersten Sichtfenster **07** sogar nur 0,06 mm bemisst. Dieser Spalt **29** wird von den bei der Herstellung plastisch verformten ersten und zweiten Dichtungen **09,10** ausgefüllt, sodass die Probenkammer **01** extrem hochdruckdicht ist, sogar bei Hochdrücken von 500 bar und mehr.

Die **Figur 2** zeigt die Probenkammer **01** in der Draufsicht und gibt die Schnittebene **AA** für die **Figur 1** an. Zu erkennen sind der zylindrische Aufbau mit dem Kammerkörper **05** mit einem sechseckigen Absatz **30,** über den die Probenkammer **01** gut in einer entsprechenden Vorrichtung montiert werden kann. Dadurch kann im Betrieb, insbesondere auch unter Hochdruck, eine gute Stabilität der Probenkammer **01** erreicht werden. Weiterhin ist das sechseckige Betätigungselement **16** des ersten Spannelements **11** dargestellt. Zu erkennen ist die konisch verlaufende erste Sichtöffnung **13,** in die der planparallele erste Absatz **23** des ersten Sichtfensters **07** passgenau hineinragt. In der Mitte der ersten Sichtöffnung **13** sind die Durchlichtrichtung **02** und der diese umgebende Ringfilter **37** in der Draufsicht zu erkennen. Dargestellt sind ebenfalls drei Zu- und Ableitungskanäle **20,** die als Druckanschlüsse genutzt werden.

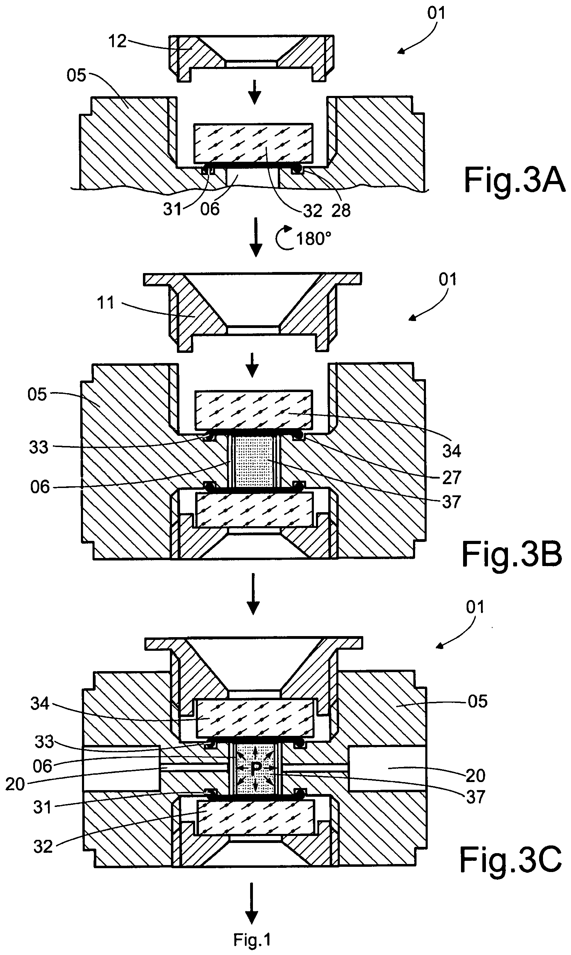

Die **Figuren 3A****,B,C** zeigen schematisch den Verfahrensablauf zur Herstellung der Probenkammer **01** in unterschiedlichen Stadien. In einem ersten Verfahrensschritt gemäß **Figur 3A** m Schritt **A** werden zuerst ein zweiter Dichtring **31** aus Teflon® mit reckeckigem Querschnitt und eine transparente, absatzfreie zweite Planscheibe **32** aus Polycarbonat, die völlig eben ausgebildet ist, in den Kammerkörper **05** bzw. die zweite Dichtnut **28** im Bereich des Probenraums **06** eingelegt und mit dem zweiten Spannelement **12** durch dessen Einschrauben in den Kammerkörper **05** hochdruckfest fixiert.

Anschließend wird der Kammerkörper **05** um 180° gedreht und in einem zweiten Verfahrensschritt gemäß **Figur 3B** der Ringfilter **37** aus Sintermaterial, ein erster Dichtring **33** aus Teflon® mit reckeckigem Querschnitt und eine erste Planscheibe **34** aus Polycarbonat, die ebenfalls transparent und eben und damit absatzfrei ausgebildet ist, in den Kammerkörper **05** bzw. die erste Dichtnut **27** im Bereich des Probenraums **06** eingelegt und mit dem ersten Spannelement **11** durch dessen Einschrauben in den Kammerkörper **05** fixiert. Eine Montage in umgekehrter Reihenfolge ist genauso möglich.

In einem dritten Verfahrensschritt gemäß **Figur 3C** wird die fertig montierte Probenkammer **01** bzw. der Probenraum **06** dann über die hochdruckfesten Zuleitungskanäle **20** unter einen Hochdruck (Symbol "p" mit Pfeilen) gesetzt, der plastische Verformung hervorruft, beispielsweise unter einen Hochdruck von 500 bar, entsprechend 5 kN/cm². Die beiden Planscheiben **32,34** und die beiden Dichtringe **31,33** beginnen zu fließen (in der **Figur 3C** nicht gezeigt). Dabei bilden sich aus den beiden Planscheiben **32, 34** die Sichtfenster **07, 08** mit den planparallelen Absätzen **23, 25** und aus den beiden Dichtringen **31, 33** die beiden Dichtungen **09, 10** gemäß **Figur 1****.** Nach der Entlastung des Probenraums **06** vom Hochdruck verbleiben die Sichtfenster **07, 08** mit den planparallelen Absätzen **23, 25** und die beiden Dichtungen **09, 10** in ihrer plastischen Verformung. Es entsteht eine hochdruckfeste Probenkammer **01,** die im Mikroskopierbetrieb mit einem Druck zwischen Atmosphärendruck und maximal 500 bar (entsprechend dem bei der Herstellung aufgebrachten Hochdruck) belastet werden kann.

### Bezugszeichenliste

**01** Probenkammer
**02** Durchlichtrichtung
**03** Lichtquelle
**04** Mikroskop
**05** Kammerkörper
**06** Probenraum
**07** erstes Sichtfenster
**08** zweites Sichtfenster
**09** erste Dichtung
**10** zweite Dichtung
**11** erstes Spannelement
**12** zweites Spannelement
**13** erste Sichtöffnung
**14** zweite Sichtöffnung
**15** erstes Außengewinde
**16** Betätigungselement
**17** erstes Innengewinde
**18** zweites Außengewinde
**19** zweites Innengewinde
**20** Zu- und Ableitungskanal, Druckanschluss
**21** Kühl- und Heizelemente
**22** Kammerloch
**23** erster planparalleler Absatz
**24** erster zylindrischer Ansatz
**25** zweiter planparalleler Absatz
**26** zweiter zylindrischer Ansatz
**27** erste Dichtnut
**28** zweite Dichtnut
**29** Spalt
**30** sechseckiger Absatz
**31** zweiter Dichtring
**32** zweite Planscheibe
**33** erster Dichtring
**34** erste Planscheibe
**35** erste Einsenkung
**36** zweite Einsenkung
**37** Ringfilter

## Patentansprüche

1. Hochdruckfeste Probenkammer (01) für die Durchlicht-Mikroskopie mit zumindest einem Kammerkörper (05) mit einem Probenraum (06), der in Durchlichtrichtung (02) an gegenüberliegenden Seiten von einem transparenten ersten Sichtfenster (07) und von einem transparenten zweiten Sichtfenster (08) jeweils unter Zwischenlage einer hochdruckfesten Dichtung (09, 10) abgeschlossen ist, und mit einem ersten Spannelement (11) und einem zweiten Spannelement (12) zur Fixierung der beiden Sichtfenster (07, 08) am Probenraum (06), wobei das erste Spannelement (11) eine erste Sichtöffnung (13) und das zweite Spannelement (12) eine zweite Sichtöffnung (14) in den Probenraum (06) aufweist, **dadurch gekennzeichnet, dass**
das erste Sichtfenster (07) einen ersten planparallelen Absatz (23) aufweist, der in die erste Sichtöffnung (13) des ersten Spannelements (11) passgenau hineinragt, und das zweite Sichtfenster (08) einen zweiten planparallelen Absatz (25) aufweist, der in die zweite Sichtöffnung (14) des zweiten Spannelements (12) passgenau hineinragt, wobei die Sichtfenster (07, 08) und die hochdruckfesten Dichtungen (09, 10) jeweils aus einem Plastomer bestehen, und dass im Kammerkörper (05) hochdruckfeste Zu- und Ableitungskanäle (20) angeordnet sind, die eine Versorgung des Probenraums (06) und/oder eine Zirkulation durch den Probenraum (06) ermöglichen.

2. Hochdruckfeste Probenkammer (01) nach Anspruch 1,
**dadurch gekennzeichnet, dass**
die beiden Sichtfenster (07, 08) aus transparentem Polycarbonat und die beiden Dichtungen (09, 10) aus Polytetrafluorethylen bestehen.

3. Hochdruckfeste Probenkammer (01) nach Anspruch 1 oder 2,
**dadurch gekennzeichnet, dass**
das erste Sichtfenster (07) dicker ist als das zweite Sichtfenster (08).

4. Hochdruckfeste Probenkammer (01) nach einem der vorangehenden Ansprüche,
**dadurch gekennzeichnet, dass**
der Probenraum (06), die beiden Sichtfenster (07, 08), die beiden Spannelemente (11, 12) und die beiden Dichtungen (09, 10) zylinderförmig ausgebildet sind.

5. Hochdruckfeste Probenkammer (01) nach Anspruch 4,
**dadurch gekennzeichnet, dass**
die beiden Spannelemente (11, 12) jeweils ein Außengewinde (15, 18) aufweisen, mit denen sie jeweils in ein Innengewinde (17, 19) im Kammerkörper (05) eingeschraubt sind.

6. Hochdruckfeste Probenkammer (01) nach einem der vorangehenden Ansprüche,
**dadurch gekennzeichnet, dass**
die Dichtungen (09, 10) in Dichtnuten (27, 28) im Kammerkörper (05) eingelegt sind, wobei die Dichtnuten (27, 28) den Probenraum (06) in geschlossener Form umlaufen.

7. Hochdruckfeste Probenkammer (01) nach einem der vorangehenden Ansprüche,
**dadurch gekennzeichnet, dass**
Heiz- und/oder Kühlelemente (21) für den Probenraum (06) vorhanden sind.

8. Hochdruckfeste Probenkammer (01) nach einem der vorangehenden Ansprüche,
**dadurch gekennzeichnet, dass**
im Probenraum (06) um die Durchlichtrichtung (02) herum ein wasserdurchlässiger Ringfilter (37) über die gesamte Höhe des Probenraums (06) vorhanden ist.

9. Hochdruckfeste Probenkammer (01) nach Anspruch 8,
**dadurch gekennzeichnet, dass**
der Ringfilter (37) aus einem Sintermaterial besteht.

10. Verfahren zur Herstellung einer hochdruckfesten Probenkammer (01) nach einem der vorangehenden Ansprüche,
**dadurch gekennzeichnet, dass**
eine transparente absatzfreie erste Planscheibe (34) und eine transparente absatzfreie zweite Planscheibe (32) jeweils unter Zwischenlage von Dichtringen (31, 33) in die Probenkammer (01) eingebracht werden, wobei die beiden Planscheiben (32, 34) und die Dichtringe (31, 33) jeweils aus einem Plastomer bestehen, anschließend die Probenkammer (01) fertigmontiert wird und abschließend der Probenraum (06) mit einem solchen Hochdruck beaufschlagt wird, dass die beiden Planscheiben (32, 34) und die Dichtringe (31, 33) sich plastisch verformen und die ersten und zweiten Sichtfenster (07, 08) mit planparallelen Absätzen (23, 25) und die beiden hochdruckfesten Dichtungen (09, 10) ausbilden.

11. Verfahren nach Anspruch 10,
**dadurch gekennzeichnet, dass**
die beiden Planscheiben (32, 34) aus Polycarbonat und die beiden Dichtringe (31, 33) aus Polytetrafluorethylen bestehen.

12. Verfahren nach Anspruch 10 oder 11,
**dadurch gekennzeichnet, dass**
der Probenraum (06) mit einem Hochdruck zwischen 2 kN/cm² und 15 kN/cm² beaufschlagt wird.

13. Verfahren nach Anspruch 12,
**dadurch gekennzeichnet, dass**
der Probenraum (06) mit einem Hochdruck zwischen 3 kN/cm² und 8 kN/cm² oder mit einem Hochdruck von 5 kN/cm² beaufschlagt wird.

14. Verfahren nach einem der Ansprüche 10 bis 13,
**dadurch gekennzeichnet, dass**
nach dem Einbringen einer der beiden Planscheiben (32, 34) und einem der beiden Dichtringe (31, 33) ein Ringfilter (37) um die Durchlichtrichtung (02) herum in die Probenkammer (06) eingebracht wird.

## Claims

1. High-pressure resistant sample chamber (01) for transmitted light microscopy with at least one chamber body (05) with a sample room (06) which in the transmitted light direction (02) is closed off at opposite sides by a transparent first viewing window (07) and a transparent second viewing window (08), each with the interspersion of a high-pressure resistant seal (09, 10), and with a first clamping element (11) and a second clamping element (12) for fixing the two viewing windows (07, 08) to the sample room (06), wherein the first clamping element (11) has a first viewing opening (13) and the second clamping element (12) has a second viewing opening (14) into the sample room (06),
**characterised in that**
the first viewing window (07) has a plane-parallel ledge (23) which projects in a precisely fitting manner into the first viewing opening (13) of the first clamping element (11) and the second viewing window (08) has a second plane-parallel ledge (25) which projects in a precisely fitting manner into the second viewing opening (14) of the second clamping element (12) wherein the viewing windows (07, 08) and the high-pressure resistant seals (09, 10) are each made of a plastomer, and **in that** in the chamber body (05) high-pressure resistant inlet and outlet channels (20) are arranged which allow supplying of the sample room (06) and/or circulation through the sample room (06).

2. High-pressure resistant sample chamber (01) according to claim 1
**characterised in that**
the two viewing windows (07, 08) are made of transparent polycarbonate and the two seals (09, 10) are made of polytetrafluoroethylene.

3. High-pressure resistant sample chamber (01) according to claim 1 or 2
**characterised in that**
the first viewing window (07) is thicker than the second viewing window (08).

4. High-pressure resistant sample chamber (01) according to any one of the preceding claims
**characterised in that**
the sample room (06), the two viewing windows (07, 08), the two clamping elements (11, 12) and the two seals (09, 10) are cylindrical in design.

5. High-pressure resistant sample chamber (01) according to claim 4
**characterised in that**
the two clamping elements (11, 12) each have an external thread (15, 18) with which they can each be screwed into an internal thread (17, 19) in the chamber body (05),

6. High-pressure resistant sample chamber (01) according to any one of the preceding claims
**characterised in that**
the seals (09, 10) are inserted into sealing grooves (27, 28) in the chamber body (05), wherein the sealing grooves (27, 28) surround the sample room (06) in a closed manner.

7. High-pressure resistant sample chamber (01) according to any one of the preceding claims
**characterised in that**
heating and/or cooling elements (21) are present for the sample room (06).

8. High-pressure resistant sample chamber (01) according to any one of the preceding claims
**characterised in that**
in the sample room (06) a water-permeable ring filter (37) is present around the transmitted light direction (02) over the entire height of the sample room (06).

9. High-pressure resistant sample chamber (01) according to claim 8
**characterised in that**
the ring filter (37) is made of a sinter material.

10. Method of producing a high-pressure resistant sample chamber (01) according to any one of the preceding claims
**characterised in that**
a transparent ledge-free first face plate (34) and a transparent ledge-free second face plate (32), each with interspersed sealing rings (31, 33) are introduced into the sample chamber (01), wherein the two face plates (32, 34) and the sealing rings (31, 33) are each made of a plastomer, the sample chamber (01) is then finally assembled and the sample room (06) is subjected to such a high pressure that the two face plates (32, 34) and the sealing rings (31, 33) become plastically deformed and form the first and the second viewing window (07, 08) with plane-parallel ledges (23, 25) and the two high-pressure resistant seals (09, 10).

11. Method according to claim 10
**characterised in that**
the two face plates (32, 34) are made of polycarbonate and the two sealing rings (31, 33) are made of polytetrafluoroethylene.

12. Method according to claim 10 or 11
**characterised in that**
the sample room (06) is subjected to a high pressure of between 2 kN/cm² and 15 kN/cm².

13. Method according to claim 12
**characterised in that**
the sample room (06) is subjected to a high pressure of between 3 kN/cm² and 8 kN/cm² or which a high pressure of 5 kN/cm².

14. Method according to any one of claims 10 to 13
**characterised in that**
after the insertion of one of the two face plates (32, 34) and one of the two sealing rings (31, 33) a ring filter (37) is introduced into the sample chamber (06) around the transmitted light direction (02).

## Revendications

1. Chambre d'échantillons résistant aux hautes pressions (01) pour la microscopie à lumière transmise, dotée d'au moins un corps de chambre (05) avec un compartiment à échantillons (06), qui en direction de transmission de la lumière (02) est fermé sur des faces opposées par un premier regard (07) transparent et par un deuxième regard (08) transparent, chaque fois sous interposition d'un joint (09, 10) résistant aux hautes pressions, et avec un premier élément de serrage (11) et un deuxième élément de serrage (12) destinés à fixer les deux regards (07, 08) sur le compartiment à échantillons (06), le premier élément de serrage (11) comportant un premier orifice de vision (13) et le deuxième élément de serrage (12) comportant un deuxième orifice de vision (14) dans le compartiment à échantillons (06), **caractérisée en ce que** le premier regard (07) comporte un premier talon (23) plan et parallèle qui saillit de manière ajustée dans le premier orifice de vision (13) du premier élément de serrage (11) et le deuxième regard (08) comporte un deuxième talon (25) plan et parallèle, qui saillit de manière ajustée dans le deuxième orifice de vision (14) du deuxième élément de serrage (12), les regards (07, 08) et les joints (09, 10) résistant aux hautes pressions étant respectivement composés d'un plastomère et **en ce que** dans le corps de chambre (05) sont placés des conduits d'arrivée et d'évacuation (20) résistant aux hautes pressions, qui permettent une alimentation du compartiment à échantillons (06) et/ou une circulation à travers le compartiment à échantillons (06).

2. Chambre d'échantillons résistant aux hautes pressions (01) selon la revendication 1, **caractérisée en ce que** les deux regards (07, 08) sont en polycarbonate transparent et les deux joints (09, 10) sont en polytétrafluoroéthylène.

3. Chambre d'échantillons résistant aux hautes pressions (01) selon la revendication 1 ou 2, **caractérisée en ce que** le premier regard (07) est plus épais que le deuxième regard (08).

4. Chambre d'échantillons résistant aux hautes pressions (01) selon l'une quelconque des revendications précédentes, **caractérisée en ce que** le compartiment à échantillons (06), les deux regards (07, 08), les deux éléments de serrage (11, 12) et les deux joints (09, 10) sont conçus de forme cylindrique.

5. Chambre d'échantillons résistant aux hautes pressions (01) selon la revendication 4, **caractérisée en ce que** les deux éléments de serrage (11, 12) comportent chacun un filetage (15, 18), par lesquels ils sont vissés chacun dans un taraudage (17, 19) dans le corps de chambre (05).

6. Chambre d'échantillons résistant aux hautes pressions (01) selon l'une quelconque des revendications précédentes, **caractérisée en ce que** les joints (09, 10) sont insérés dans des rainures d'étanchéité (27, 28) dans le corps de chambre (05), les rainures d'étanchéité (27, 28) entourant le compartiment à échantillons (06) sous forme fermée.

7. Chambre d'échantillons résistant aux hautes pressions (01) selon l'une quelconque des revendications précédentes, **caractérisée en ce que** des éléments chauffants et/ou réfrigérant (21) sont présents pour le compartiment à échantillons (06).

8. Chambre d'échantillons résistant aux hautes pressions (01) selon l'une quelconque des revendications précédentes, **caractérisée en ce que** dans le compartiment à échantillons (06), autour de la direction de transmission de la lumière (02), un filtre annulaire (37) perméable à l'eau est présent sur toute la hauteur du compartiment à échantillons (06).

9. Chambre d'échantillons résistant aux hautes pressions (01) selon la revendication 8, **caractérisée en ce que** le filtre annulaire (37) est en un matériau fritté.

10. Procédé destiné à la fabrication d'une chambre d'échantillons (01) résistant aux hautes pressions selon l'une quelconque des revendications précédentes, **caractérisé en ce qu'**on introduit un premier plateau transparent (34) sans talon et un deuxième plateau transparent (32) sans talon, en interposant chaque fois des joints toriques (31, 33) dans la chambre d'échantillons (01), les deux plateaux (32, 34) et les joints toriques (31, 33) étant composés chacun d'un plastomère, on termine ensuite le montage de la chambre d'échantillons (01) et pour finir, on soumet le compartiment à échantillons (06) à une pression si élevée que les deux plateaux (32, 34) et les joints toriques (31, 33) subissent une déformation plastique et forment les premier et deuxième regards (07, 08) avec des talons (23, 25) plans et parallèles et les deux joints (09, 10) résistant aux hautes pression.

11. Procédé selon la revendication 10, **caractérisé en ce que** les deux plateaux (32, 34) sont en polycarbonate et les deux joints toriques (31, 33) sont en polytétrafluoroéthylène.

12. Procédé selon la revendication 10 ou 11, **caractérisé en ce qu'**on soumet le compartiment à échantillons (06) à une haute pression comprise entre 2 kN/cm² et 15 kN/cm².

13. Procédé selon la revendication 12, **caractérisé en ce qu'**on soumet le compartiment à échantillons (06) à une haute pression comprise entre 3 kN/cm² et 8 kN/cm² ou à une haute pression de 5 kN/cm².

14. Procédé selon l'une quelconque des revendications 10 à 13, **caractérisé en ce qu'**après l'introduction de l'un des deux plateaux (32, 34) et de l'un des deux joints toriques (31, 33), on introduit un filtre annulaire (37) autour de la direction de transmission de la lumière (02) dans la chambre d'échantillons (06).
